# EUROPÄISCHE PATENTSCHRIFT

(11) **EP 1 515 350 B1**
(45) Veröffentlichungstag und Bekanntmachung des Hinweises auf die Patenterteilung: **13.04.2011**
(21) Anmeldenummer: 03405659.8
(22) Anmeldetag: 09.09.2003
(51) Int. Cl.: H01H 13/83

(54) **Beleuchtbares Tastaturelement für ein Tastaturfeld**
Backlit push button for keyboard
Bouton de commande éclairé par l'arrière pour clavier

(43) Veröffentlichungstag der Anmeldung: 16.03.2005
(73) Patentinhaber: SCHURTER Input Systems AG, 5507 Mellingen (CH)
(72) Erfinder: Hädener, Peter, 3380 Wangen an der Aare (CH); Matter, Erich, 5430 Wettingen (CH); Knüsel, Roger, 3377 Walliswil b. Wangen (CH)
(74) Vertreter: BOVARD AG

(56) Entgegenhaltungen:
- EP-A2- 1 005 055
- DE-A1- 3 535 217
- DE-U1- 20 118 930
- FR-A1- 2 616 560
- US-A- 4 670 633
- US-A- 6 036 326
- US-A1- 5 375 043

## Beschreibung

Die vorliegende Erfindung bezieht sich auf ein beleuchtbares Tastaturelement, das in ein Tastaturfeldeingesetzt ist, welches Tastaturfeld durch eine obere Abdeckplatte und eine davon beabstandete Grundplatte gebildet ist, welche obere Abdeckplatte mit Durchbrüchen versehen ist, in welchen das Tastaturelement, das aus einem im wesentlichen transparenten plattenförmigen Körperelement besteht, einsetzbar und auf der Grundplatte abstützbar ist, wobei zwischen dem plattenförmigen Körperelement und der Grundplatte ein Schaltelement eingesetzt ist, und welches Tastaturelement mit Beleuchtungsmitteln ausgestattet ist.

Tastaturelemente für ein Tastaturfeld oder ganz allgemein für Schalttafeln, welche zur Ausführung von Steuerungen und/oder Anzeigen von Steuervorgängen und Zuständen von irgend welchen Einrichtungen dienen, sind oftmals beleuchtet, einerseits damit auch bei nicht optimalen Lichtverhältnissen der Umgebung ein Tastaturelement aufgefunden werden kann, andererseits aber auch, damit gewisse Zustände einer Schaltung oder Schaltstellung durch Ein- bzw. Ausschaltung der Beleuchtung angezeigt werden können.

Derartige beleuchtbare Tastaturelemente sind bekannt. Vielfach sind diese Tastaturelemente in jeweils einem Gehäuse untergebracht, zusammen mit dem Schaltelement und der Beleuchtung. Aus dem Gehäuse ragen Kontaktstifte, mit welchen diese Tastaturelemente beispielsweise in Leiterplatten eingesetzt und dort verlötet werden.

Diese bekannten beleuchtbaren Tastaturelemente haben den Nachteil, dass sie relativ teuer sind, und eine relativ grosse Bauhöhe aufweisen. Zudem ist das Anbringen dieser Tastaturelemente in den entsprechenden Leiterplatten aufwändig. Da diese Tastaturelemente eine integrierte Beleuchtung aufweisen, kann diese nur ein- und ausgeschaltet werden, Veränderungen in der Farbe der Beleuchtung sind nicht möglich.

Das Dokument US-A-4 670 633 zeigt eine Einrichtung zur Beleuchtung von Tastenelementen einer Tastatur, bei welcher über eine geringe Anzahl von Lichtquellen die Tastenelemente mittels zusätzlicher Reflektoren gleichmässig beleuchtet werden. Einzelne Tastenelemente allein lassen sich nicht beleuchten, eine Änderung der Farbe von einzelnen Tastenelementen ist nicht möglich.

Die Aufgabe der vorliegenden Erfindung besteht nun darin, ein beleuchtbares Tastaturelement, das in ein Tastaturfeld eingesetzt ist, zu schaffen, welches günstig herstellbar ist, welches verschiedenfarbig leuchten kann und welches ohne weiteres an verschiedene Grössen und Formen im jeweiligen Tastaturfeld anpassbar ist.

Erfindungsgemäss erfolgt die Lösung dieser Aufgabe dadurch, dass entlang den Randflächen des Tastaturelementes zwischen oberer Abdeckplatte und Grundplatte mindestens zwei Paare von lichtemittierenden Elementen angebracht sind, deren Lichtstrahlen im wesentlichen gegen die jeweilige Randfläche gerichtet sind, und jedes Paar eine Farbe aufweist, die unterschiedlich ist zur Farbe der anderen Paare, welche lichtemittierenden Elemente paarweise wahlweise ein- und ausschaltbar sind, und die lichtemittierenden Elemente von jedem Paar bezüglich des Tastaturelementes im wesentlichen gegenüberliegend angeordnet sind.

Durch die Verwendung eines plattenförmigen Körperelementes, das an jegliche Form von Durchbrüchen in der oberen Abdeckplatte anpassbar ist, können Tastaturfelder bzw. Schalttafeln in praktisch beliebiger Weise zusammengestellt werden. Durch die Anordnung von mehreren lichtemittierenden Elementen, die unterschiedliche Farben haben können und die wählbar ein- und ausgeschaltet werden können, kann das Tastaturelement in unterschiedlichen Farben leuchten. Dadurch können über das gleiche Tastaturelement über die Farbwahl der Beleuchtung unterschiedliche Zustände des gesteuerten Vorgangs angezeigt werden.

Indem zwischen dem plattenförmigen Körperelement und der Grundplatte ein Schaltelement eingesetzt ist, wird ein sehr einfacher Aufbau eines Schalters erreicht, die Schaltbewegungen des plattenförmigen Körperelementes können sehr gering gehalten werden, die Formvielfältigkeit der Körperelemente ist gegeben.

In vorteilhafter Weise sind die lichtemittierenden Elemente lichtemittierende Dioden, welche in einfacher Weise angebracht werden können.

Eine weitere vorteilhafte Ausgestaltung der Erfindung besteht darin, dass die der Grundplatte abgewandte Oberfläche der oberen Abdeckplatte mit einer Folie versehen ist, welche die der Grundplatte abgewandte Oberfläche des Tastaturelementes ebenfalls überdeckt. Diese Folie kann bedruckt werden, so dass alle erforderlichen Angaben für die Tastaturelemente und zusätzliche Bereiche auf dieser Folie angebracht werden können. Zudem erhält man eine absolut dichte Oberfläche des Tastaturfeldes bzw. der Schalttafel.

Das plattenförmige Körperelement kann mindestens teilweise eine strukturierte Oberfläche aufweisen, die von der Oberflächenbeschaffenheit einer Form, in welche bei der Herstellung des Grundkörpers zur Bildung der plattenförmigen Körperelemente das in flüssiger Form vorliegende Ausgangsmaterial eingegossen oder eingespritzt wird, herrühren. Dadurch kann die Ausleuchtung des Körperelementes beeinflusst werden.

Eine weitere vorteilhafte Ausgestaltung der Erfindung besteht darin, dass mindestens ein Teil der Oberflächen des plattenförmigen Körperelementes oberflächenbehandelt ist. Durch diese Oberflächenbehandlungen kann erreicht werden, dass eine gleichmässige Ausleuchtung des ganzen Körperelementes erhalten wird.

In vorteilhafter Weise besteht das plattenförmige Körperelement aus einem Acrylglas, dieses kann sehr einfach bearbeitet werden, ferner verteilt sich das Licht, das durch die lichtemittierenden Elemente in dieses plattenförmige Körperelement eingestrahlt wird, in optimaler Weise.

Besonders vorteilhaft ist es, wenn diese Oberflächen des aus Acrylglas bestehenden plattenförmigen Körperelementes sandgestrahlt sind. Hierdurch wird eine optimale und gleichmässige Leuchtkraft erhalten.

Weitere vorteilhafte Ausgestaltungen der Erfindung ergeben sich aus den weiteren abhängigen Ansprüchen.

Ausführungsformen der erfindungsgemässen beleuchtbaren Tastaturelemente werden nachfolgend anhand der beiliegenden Zeichnung beispielhaft näher erläutert.

Es zeigt:
Fig. 1 eine Schnittdarstellung durch ein erfindungsgemässes beleuchtbares Tastaturelement, eingesetzt in das Tastaturfeld;
Fig. 2 eine Draufsicht auf das erfindungsgemässe beleuchtbare Tastaturelement gemäss Fig. 1;
Fig. 3 eine Schnittdarstellung einer Ausführungsform, die nicht als zur Erfindung gehörend zu betrachten ist, die ein beleuchtbares Tastaturelementzeigt, das nur als Anzeigefeld dient;
Fig. 4 bis Fig. 6 Draufsichten auf erfindungsgemässe beleuchtbare Tastaturelemente mit verschiedenen Formen.

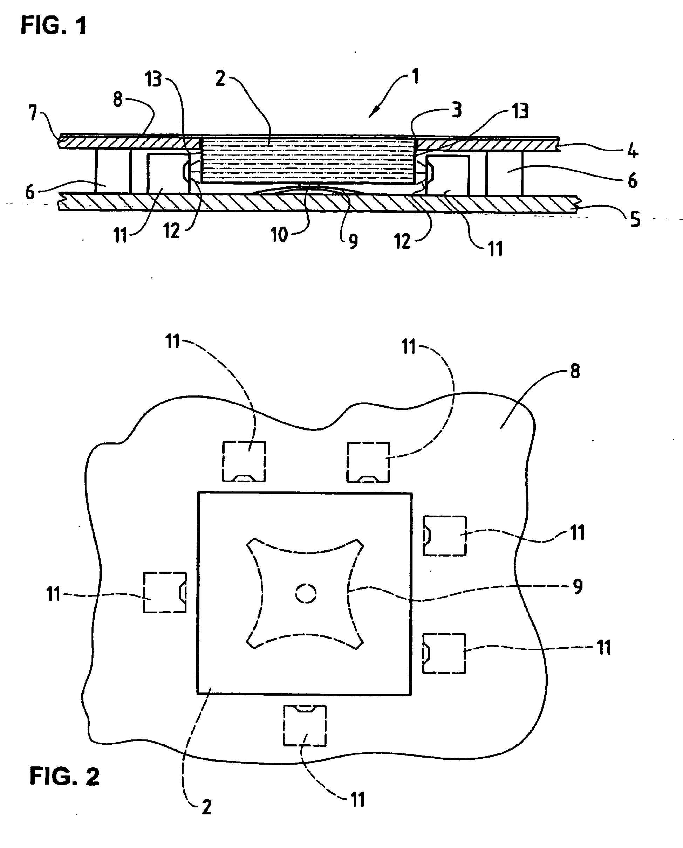

Wie aus den Fig. 1 und 2 ersichtlich ist, besteht das beleuchtbare Tastaturelement 1 aus einem plattenförmigen Körperelement 2. Dieses plattenförmige Körperelement 2 ist in einen Durchbruch 3 eingesetzt, der an einer oberen Abdeckplatte 4 angebracht ist. Die obere Abdeckplatte 4 ist mit einem Abstand auf einer Grundplatte 5 angebracht, wobei die obere Abdeckplatte 4 über Abstandelemente 6 mit der Grundplatte 5 verbunden ist.

Auf der Oberfläche 7 der oberen Abdeckplatte 4, welche Oberfläche 7 der Grundplatte 5 abgewandt ist, ist eine Folie 8 aufgebracht, beispielsweise durch Aufkleben. Diese Folie 8 kann bedruckt sein, mit dieser Folie 8 wird die obere Abdeckplatte 4 vollständig oder teilweise überdeckt, dadurch kann ein Tastaturfeld mit mehreren Tastaturelementen 1 und Anzeigeelementen, die später noch beschrieben werden, gebildet werden, es können so auch ganze Schalttafeln aufgebaut werden.

Zwischen dem plattenförmigen Körperelement 2 und der Grundplatte 5 ist ein druckbetätigbares Schaltelement 9 eingesetzt. Derartige druckbetätigbare Schaltelemente werden umgangssprachlich als "Schaltfrosch" bezeichnet. Um eine optimale Betätigung dieses Schaltelementes 9 erreichen zu können, ist an der Kontaktstelle zwischen plattenförmigem Körperelement 2 und Schaltelement 9 am plattenförmigen Körperelement 2 eine Erhebung 10 angebracht. Zur Betätigung dieses Schaltelementes 9 wird von der Folienseite her auf das plattenförmige Körperelement 2 gedrückt, wegen der Elastizität der Folie 8 lässt sich dieses plattenförmige Körperelement 2 gegen das Schaltelement 9 drücken, wodurch in bekannter Weise das Schaltelement 9 einen Kontakt zwischen dem Zentrum und den äusseren Teilen herstellt. Nach dem Loslassen des plattenförmigen Körperelementes 2 wird einerseits durch die Elastizität der Folie 8 und andererseits durch das Zurückfedern des Schaltelementes 9 das plattenförmige Körperelement 2 in die Ausgangslage zurückgebracht.

Zwischen der oberen Abdeckplatte 4 und der Grundplatte 5 sind lichtemittierende Elemente 11 angeordnet, die vorzugsweise an der Grundplatte 5 befestigt sind. Die Energieversorgung dieser lichtemittierenden Elemente 11 erfolgt in bekannter Weise über die Grundplatte 5. Im vorliegenden Ausführungsbeispiel sind die lichtemittierenden Elemente 11 lichtemittierende Dioden (LED), deren Lichtstrahlen 12 gegen die Randflächen 13 gerichtet sind.

Das plattenförmige Körperelement 2 besteht aus einem Acrylglas. Beim Einschalten der lichtemittierenden Elemente 11 wird das Licht durch die Randflächen 13 in das plattenförmige Körperelement 2 eingeleitet. Dieses plattenförmige Körperelement 2 soll möglichst gleichmässig ausgeleuchtet sein, so dass die sichtbare Oberfläche des plattenförmigen Körperelementes 2 möglichst gleichmässig leuchtet. Ein besonders geeignetes Material für die plattenförmigen Körperelemente 2 ist das unter der Bezeichnung Plexiglas GS1002 bekannte Acrylglas, das durch die Firma Röhm GmbH & Co. KG, Darmstadt, Deutschland vertrieben wird. Dieses Plexiglas gewährleistet eine gleichmässige Ausleuchtung des gesamten Körpers.

Um die Gleichmässigkeit der Ausleuchtung noch zu verbessern, kann die Oberfläche des plattenförmigen Körperelementes 2 behandelt werden, beispielsweise sandgestrahlt. Dadurch erhält man eine matte Oberfläche, eine gleichmässige Ausleuchtung ist gewährleistet, auch wenn das Einbringen der Lichtstrahlen beispielsweise nur von einer Seite erfolgt.

Wie insbesondere aus Fig. 2 ersichtlich ist, können entlang der Randflächen 13 des plattenförmigen Körperelementes 2 mehrere lichtemittierende Elemente 11 paarweise angebracht sein. Jedes der Paare dieser lichtemittierenden Elemente 11 strahlt ein Licht in einer bestimmten Farbe aus. In Fig. 2 kann zum Beispiel das obere linke lichtemittierende Element 11 und das untere lichtemittierende Element 11 die Farbe gelb haben. Das rechte obere lichtemittierende Element 11 und das linke lichtemittierende Element 11 können beispielsweise die Farbe rot haben, das rechte untere lichtemittierende Element 11 und das rechte obere lichtemittierende Element 11 können beispielsweise die Farbe grün haben. So können jeweils zwei gleichfarbige lichtemittierende Elemente 11 eingeschaltet werden, das plattenförmige Körperelement 2 erscheint dann in dieser Farbe beleuchtet. Durch entsprechendes Schalten der lichtemittierenden Elemente 11 kann somit das plattenförmige Körperelement 2 je nach Wunsch andersfarbig beleuchtet werden.

Je nach Grösse des plattenförmigen Körperelementes können jeweils ein, zwei oder mehr lichtemittierende Elemente 11 der gleichen Farbe im Bereich der Randflächen 13 verteilt über den Umfang angeordnet werden. Dadurch kann auch bei grösseren Abmessungen eines plattenförmigen Körperelementes 2 eine optimale flächige Ausleuchtung erreicht werden.

Mit diesen unterschiedlich farbigen Ausleuchtungsmöglichkeiten des plattenförmigen Körperelementes 2 können verschiedene Zustände beispielsweise bei einem Steuerungsvorgang für eine Maschine durch verschiedene Farben dargestellt werden.

Die Grundplatte 5 kann als Leiterplatte ausgebildet sein, dadurch wird das Anbringen und die Schaltung der schaltbaren Elemente dieser beleuchtbaren Tastaturelemente vereinfacht.

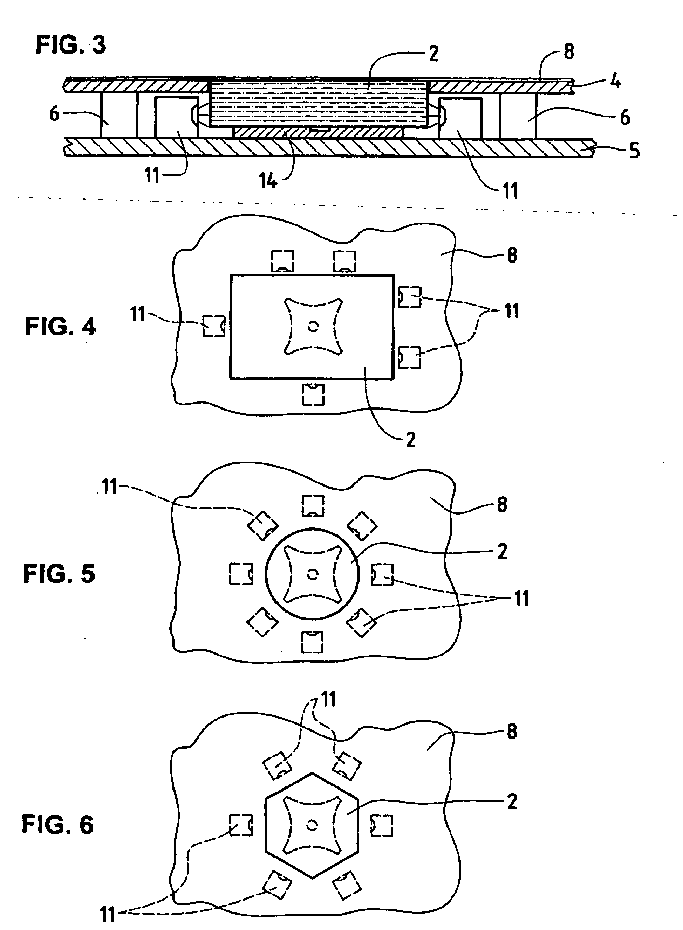

Es wäre auch denkbar, dieses plattenförmige Körperelement 2 auch ohne Schaltelement einzusetzen, wie dies in Fig 3 dargestellt ist. Zwischen plattenförmigem Körperelement 2 und der Grundplatte 5 könnte je nach Bedarf eine Zwischenplatte 14 eingesetzt werden, damit eventuelle Höhenunterschiede ausgeglichen werden könnten. Das so angeordnete plattenförmige Körperelement 2 diente dann lediglich als nicht schaltbares Anzeigeelement, welches mit mehreren lichtemittierenden Elementen 11, die verschiedenfarbig sind, beleuchtet werden könn. Dadurch kann durch dieses Anzeigeelement ebenfalls beispielsweise der jeweilige Betriebszustand einer angesteuerten Maschine mit unterschiedlichen Farben dargestellt werden.

Aus den Fig. 4 bis 6 sind jeweils plattenförmige Körperelemente 2 dargestellt, die verschiedene Formen haben können. Je nach Grösse und gewünschten Farben, mit welchen diese plattenförmigen Körperelemente 2 beleuchtet werden sollen, sind mehr oder weniger lichtemittierende Elemente 11 angeordnet. Diese hier gezeigten Beispiele zeigen nur eine Auswahl von Formmöglichkeiten, die praktisch beliebig erweitert werden können.

Mit diesen beleuchtbaren Tastaturelementen 1 können in beliebiger Weise Tastaturfelder und/oder Schalttafeln ausgestattet werden, die in beliebiger Weise gestaltet sein können. Mit der Folienabdeckung wird eine absolute Dichtheit erhalten, das Eindringen von Feuchtigkeit und Schmutzpartikeln wird vermieden.

Mit diesen erfindungsgemässen beleuchtbaren Tastaturelementen lassen sich auf sehr günstige Weise Tastaturfelder erstellen. Die ganze Anordnung weist eine sehr geringe Dicke auf, wodurch die Einsatzmöglichkeiten verbessert werden.

## Patentansprüche

1. Beleuchtbares Tastaturelement (1), das in ein Tastaturfeld eingesetzt ist, welches Tastaturfeld durch eine obere Abdeckplatte (4) und eine davon beabstandete Grundplatte (5) gebildet ist, welche obere Abdeckplatte (4) mit Durchbrüchen (3) versehen ist, in welchen das Tastaturelement (1), das aus einem im wesentlichen transparenten plattenförmigen Körperelement besteht, einsetzbar und auf der Grundplatte (5) abstützbar ist, wobei zwischen dem plattenförmigen Körperelement (2) und der Grundplatte (5) ein Schaltelement (9) eingesetzt ist, und welches Tastaturelement (1) mit Beleuchtungsmitteln (11) ausgestattet ist, **dadurch gekennzeichnet, dass** entlang den Randflächen (13) des Tastaturelementes (1) zwischen oberer Abdeckplatte (4) und Grundplatte (5) mindestens zwei Paare von lichtemittierenden Elementen (11) angebracht sind, deren Lichtstrahlen (12) im wesentlichen gegen die jeweilige Randfläche (13) gerichtet sind, und jedes Paar eine Farbe aufweist, die unterschiedlich ist zur Farbe der anderen Paare, welchelichtemittierenden Elemente (11) paarweise wahlweise ein- und ausschaltbar sind, und die lichtemittierenden Elemente (11) bezüglich des Tastaturelementes im wesentlichen gegenüberliegend angeordnet sind.

2. Beleuchtbares Tastaturelement nach Anspruch 1, **dadurch gekennzeichnet, dass** die lichtemittierenden Elemente (11) lichtemittierende Dioden sind.

3. Beleuchtbares Tastaturelement nach Anspruch 1 oder 2, **dadurch gekennzeichnet, dass** die der Grundplatte (5) abgewandte Oberfläche (7) der oberen Abdeckplatte (4) mit einer Folie (8) versehen ist, welche die der Grundplatte (5) abgewandte Oberfläche des Tastaturelementes (1) ebenfalls überdeckt.

4. Beleuchtbares Tastaturelement nach einem der Ansprüche 1 bis 3, **dadurch gekennzeichnet, dass** das plattenförmige Körperelement (2) mindestens teilweise eine strukturierte Oberfläche aufweist.

5. Beleuchtbares Tastaturelement nach einem der Ansprüche 1 bis 4, **dadurch gekennzeichnet, dass** mindestens ein Teil der Oberflächen des plattenförmigen Körperelements (2) oberflächenbehandelt ist.

6. Beleuchtbares Tastaturelement nach einem der Ansprüche 1 bis 5, **dadurch gekennzeichnet, dass** das plattenförmige Körperelement (2) aus einem Acrylglas besteht.

7. Beleuchtbares Tastaturelement nach Anspruch 6, **dadurch gekennzeichnet, dass** mindestens ein Teil der Oberflächen des aus Acrylglas bestehenden plattenförmigen Körperelements (2) sandgestrahlt ist.

8. Beleuchtbares Tastaturelement nach einem der Ansprüche 1 bis 7, **dadurch gekennzeichnet, dass** die Grundplatte (5) als Lelterplatte ausgebildet ist.

9. Beleuchtbares Tastaturelement nach Anspruch 8, **dadurch gekennzeichnet, dass** die lichtemittierenden Elemente (11) an der Leiterplatte befestigt sind.

## Claims

1. Keyboard element (1) able to be illuminated (1), which is inserted into a keyboard panel, which keyboard panel is formed by a top cover plate (4) and a base plate (5) spaced apart therefrom, which top cover plate (4) is provided with apertures (3), in which the keyboard element (1), which consists of a substantially transparent plate-shaped body element, is insertable and is supportable on the base plate (5), a switch element (9) being inserted between the plate-shaped body element (2) and the base plate (5), and which keyboard element (1) is provided with means of illumination (11), **characterised in that** accommodated along the edge surfaces (13) of the keyboard element (1) between top cover plate (4) and base plate (5) are at least two pairs of light-emitting elements (11), the light beams (12) of which are directed substantially toward the respective edge surface (13), and each pair has a colour, which is different from the colour of the other pairs, which light-emitting elements (11) are able to be switched on and off selectively in pairs, and the light-emitting elements (11) are disposed substantially opposite with respect to the keyboard element.

2. Keyboard element able to be illuminated according to claim 1, **characterised in that** the light-emitting elements (11) are light-emitting diodes.

3. Keyboard element able to be illuminated according to claim 1 or 2, **characterised in that** the surface (7), remote from the base plate (5), of the top cover plate (4) is provided with a foil (8), which also covers the surface, remote from the base plate (5), of the keyboard element (1).

4. Keyboard element able to be illuminated according to one of the claims 1 to 3, **characterised in that** the plate-shaped body element (2) has at least in part a structured surface.

5. Keyboard element able to be illuminated according to one of the claims 1 to 4, **characterised in that** at least one portion of the surface of the plate-shaped body element (2) is surface-treated.

6. Keyboard element able to be illuminated according to one of the claims 1 to 5, **characterised in that** the plate-shaped body element (2) is made up of acrylic glass.

7. Keyboard element able to be illuminated according to claim 6, **characterised in that** at least one portion of the surface of the plate-shaped body element (2) made up of acrylic glass is sandblasted.

8. Keyboard element able to be illuminated according to one of the claims 1 to 7, **characterised in that** the base plate (5) is designed as printed circuit board.

9. Keyboard element able to be illuminated according to claim 8, **characterised in that** the light-emitting elements (11) are attached to the printed circuit board.

## Revendications

1. Elément de clavier éclairable (1), qui est introduit dans un champ de clavier, champ de clavier qui est formé par une plaque supérieure de couverture (4) et une plaque de base distancée (5), la plaque supérieure de couverture (4) étant munie de percées (3) dans lesquelles l'élément de clavier (1) qui se compose d'un élément de corps en forme de plaque sensiblement transparent et qui peut prendre appui sur la plaque de base (5), entre l'élément de corps en forme de plaque (2) et la plaque de base (5), étant inséré un élément de commutation (9) et élément de clavier (1) qui est muni de moyens d'éclairage (11), **caractérisé en ce que** le long des surfaces de bordure (13) de l'élément de clavier (1) entre la plaque supérieure de couverture (4) et la plaque de base (5), il est disposé au moins deux paires d'éléments émettant la lumière (11) dont les rayons lumineux (12) sont dirigés sensiblement opposés à la surface de bordure respective (13), et chaque paire présente une couleur qui est différente de la couleur des autres paires, éléments émettant la lumière (11) qui sont activables ou désactivables au choix par paire et les éléments émettant la lumière (11) qui sont disposés sensiblement opposés par rapport à l'élément de clavier.

2. Elément de clavier éclairable selon la revendication 1, **caractérisé en ce que** les éléments émettant la lumière (11) sont des diodes émettant la lumière.

3. Elément de clavier éclairable selon la revendication 1 ou 2, **caractérisé en ce que** la surface (7) détournée de la plaque de base (5), de la plaque de base supérieure de couverture (4) est munie d'une feuille (8) qui recouvre également la surface détournée de la plaque de base (5) de l'élément de clavier (1).

4. Elément de clavier éclairable selon l'une des revendications 1 à 3, **caractérisé en ce que** l'élément de corps en forme de plaque (2) présente au moins partiellement une surface structurée.

5. Elément de clavier éclairable selon l'une des revendications 1 à 4, **caractérisé en ce qu'**au moins une partie des surfaces de l'élément de corps en forme de plaque (2) subit un traitement de surface.

6. Elément de clavier éclairable selon l'une des revendications 1 à 5, **caractérisé en ce que** l'élément de corps en forme de plaque (2) se compose de verre acrylique.

7. Elément de clavier éclairable selon la revendication 6, **caractérisé en ce qu'**au moins une partie des surfaces de l'élément de corps en forme de plaque se composant de verre acrylique (2) est sablée.

8. Elément de clavier éclairable selon l'une des revendications 1 à 7, **caractérisé en ce que** la plaque de base (5) est réalisée comme une plaque conductrice.

9. Elément de clavier éclairable selon la revendication 8, **caractérisé en ce que** les éléments émettant la lumière (11) sont fixés sur la plaque conductrice.
